# EUROPÄISCHE PATENTANMELDUNG

(11) **EP 2 842 850 A1**
(43) Veröffentlichungstag der Anmeldung: **04.03.2015**
(21) Anmeldenummer: 14182179.3
(22) Anmeldetag: 25.08.2014
(51) Int. Cl.: B62J 7/00

(54) **Zweiteiliger Zubehörträger für ein Fahrrad**

(30) Priorität: 26.08.2013 DE 202013007507 U
(71) Anmelder: Hefter, Christian, 83209 Prien (DE)
(72) Erfinder: Hefter, Christian, 83209 Prien (DE)
(74) Vertreter: Einsiedler, Johannes

(57) **Zusammenfassung**

Die vorliegende Erfindung betrifft einen zweiteiligen Zubehörträger (1) für ein Fahrrad mit einem ersten kreisringförmigen Halteteil (2) zur Halterung des Trägers am Gabelschaftrohr des Fahrrads, mit einem dem Außendurchmesser des Schaftrohrs angepassten Ringinnendurchmesser (3) und einem mit der Ringmantelfläche integral ausgebildeten armförmigen Fortsatz (4), und einem zweiten länglichen Trägerteil (5) zur Aufnahme von Zubehör mit zumindest einem Durchbruch (7, 8) und/oder einem Langloch.

Erfindungsgemäß weist der Zubehörträger (1) ein eine horizontale Achse aufweisendes Schwenkgelenk (6) auf, mittels dem das mit dem armförmigen Fortsatz (4) des Halteteils (2) verbundene längliche Trägerteil (5) verschwenkbar ist.

Die vorliegende Erfindung eignet sich insbesondere zur Befestigung von Fahrradzubehör, wie beispielsweise aktive und passive Beleuchtungseinrichtungen, Fahrradcomputer, Tachometer, Taschen und Flaschenhalter an dem Steuerrohr. Durch das eine horizontale Achse aufweisende Schwenkgelenk, mittels dem das mit dem armförmigen Fortsatz des Halteteils verbundene längliche Trägerteil verschwenkbar ist, lässt sich vorteilhaft ein weiterer Freiheitsgrad für die Anordnung von Zubehör in dem begrenzten Raum vor bzw. seitlich des Vorbaus gewinnen.

## Beschreibung

Die vorliegende Erfindung betrifft einen zweiteiligen Zubehörträger für ein Fahrrad mit einem ersten kreisringförmigen Halteteil zur Halterung des Trägers am Gabelschaft des Fahrrads, mit einem dem Außendurchmesser des Schaftrohrs angepassten Ringinnendurchmesser und einem mit der Ringmantelfläche integral ausgebildeten armförmigen Fortsatz, und einem zweiten länglichen Trägerteil zur Aufnahme von Zubehör mit zumindest einem Durchbruch und/oder einem Langloch.

Ein gattungsgemäßer Zubehörträger in Form und Funktion von Distanzringen für einen, beispielsweise in der DE 691 05 442 T4 offenbarten und als Ahead-Set bezeichneten Steuersatz, ist aus der DE 20 2009 015 929 U1 bekannt. Gemäß der Druckschrift erfolgt die Zubehörbefestigung indem entweder wenigstens ein Distanzring (sog. Spacer) oder eine kappenartige Haltescheibe derart als Adapter ausgeführt werden, dass sie weiterhin die Anforderungen zum Einstellen des Lenklagerspiels erfüllen, durch ihre Form jedoch zusätzlich zur Befestigung von Fahrradzubehör genutzt werden können.

Ein Steuersatz umfasst zwei Lagereinheiten von denen eine am oberen Ende des Steuerrohrs und die andere am unteren Ende des Steuerrohrs angeordnet ist. Diese Lagereinheiten nehmen das Schaftrohr der Vorderradgabel auf und lagern es drehbar. Das Schaftrohr der Gabel ragt nach oben über das obere Ende des Steuerrohrs hinaus und dient zur Befestigung eines Lenkervorbaus, der an dem überstehenden Teil des Schaftrohrs festgeklemmt wird. Über eine axiale Einstellschraube und ein Abschlussstück der oberen Lagereinheit wird auch noch das Spiel des Steuersatzes eingestellt.

Zur Variation der Lenkerhöhe, beispielsweise um von einer sportlichen zu einer bequemeren Höhe zu gelangen, ist es üblich, zwischen der oberen Lagereinheit des Steuersatzes und dem unteren Ende des Vorbaus kreisringförmige Spacer einzusetzen. Soll der Lenker hingegen wieder tiefer gelegt werden, dann ist es auch möglich, die Länge und/oder Stückzahl der zwischen Vorbau und oberer Lagereinheit vorhandenen Spacer zu verringern.

Nachteilig an dem o. g. Zubehörträger in Form und Funktion von Distanzringen ist, dass das am Zubehörträger befestigte Zubehör lediglich in radialer und gegebenenfalls einer axialen Richtung beweglich ist.

Aufgabe der vorliegenden Erfindung ist es die Nachteile des Standes der Technik zu vermeiden, und für ein an einem Zubehörträger befestigten Zubehör zusätzliche Einstellmöglichkeiten bereitzustellen.

Erfindungsgemäß wird die genannte Aufgabe von einem zweiteiligen Zubehörträger für ein Fahrrad durch die kennzeichnenden Merkmale des Patentanspruchs 1 gelöst. Vorteilhafte Aus- und Weiterbildungen sind in den abhängigen Ansprüchen angegeben.

Die Erfindung baut auf einem gattungsgemäßen Zubehörträger dadurch auf, dass ein zusätzlicher Freiheitsgrad geschaffen wird. Durch ein eine horizontale Achse aufweisendes Schwenkgelenk, mittels dem ein mit einem armförmigen Fortsatz eines Halteteils verbundenes längliches Trägerteil verschwenkbar ist, kann ein weiterer Freiheitsgrad für die räumliche Anordnung eines Zubehörs bereitgestellt werden.

In einer bevorzugten Ausführungsform wird ein weiterer Freiheitsgrad hinsichtlich der räumlichen Anordnung dadurch geschaffen, dass man das Schwenkgelenk lateral erweitert, beispielsweise indem man eine Beilagscheibe oder Distanzhülse zwischen armförmigen Fortsatz und Trägerteil einfügt. Zusätzlich oder alternativ kann das Trägerteil auch einfach oder mehrfach geschröpft sein. Damit lässt sich das Trägerteil in praktisch jeder Position vor und/oder zwischen Vorbau und oberen Lagereinheit anordnen.

Als Zubehör wird im Rahmen dieser Erfindung wird ein unmittelbar am Trägerteil befestigtes Zubehör, beispielsweise eine Lampe, oder aber eine Halterung oder Aufnahme für ein Zubehör, wie beispielsweise ein Flaschenhalter, verstanden.

Je länger das Trägerteil ist, umso weiter entfernt von dem Gabelschaft kann ein Zubehör schwenkgelagert angeordnet werden. Insbesondere bei der Verwendung eines sehr kurzen Vorbaus sollte das Trägerteil nicht kürzer als 5 cm Länge sein. In einer bevorzugten Ausführungsform ist daher das Trägerteil zwischen 10 cm und 15 cm lang. Um eine ausgewählte axiale Einstellung des Schwenkgelenks kraft- und/oder formschlüssig zu arretieren, ist dieses, beispielsweise mit einer Flügelradschraube, versehen. Da sich insbesondere bei Fahrten über Land eine derartige kraftschlüssige Verbindung lösen kann, weist in einer bevorzugten Ausführungsform des erfindungsgemäßen Zubehörträgers das Schwenkgelenk eine radiale Verzahnung auf.

Um ein großes/schweres Zubehör, beispielsweise eine Tasche an dem erfindungsgemäßen Zubehörträger zu befestigen, kann es von Vorteil sein, das Halteteil zur Halterung des Trägers am Fahrrad, und das Trägerteil zur Aufnahme des Zubehörs zu verstärken. Gemäß einer bevorzugten Ausführungsform ist daher Halteteil und Trägerteil rotationssymmetrisch ausgeführt, dergestalt, dass das Zubehör über zwei parallel angeordnete Anlenkpunkte, beispielsweise über eine Schraub- oder Schnappverbindung, gehaltert werden kann.

Der erfindungsgemäße Zubehörträger kann kostengünstig als Spritzgussteil hergestellt werden. Für eine höherwertige Ausführungsform kann der zweiteilige Träger auch aus Metall, insbesondere aus Aluminium, hergestellt werden.

Die Erfindung wird nachfolgend mit Bezug auf die begleitenden Zeichnungen anhand einer besonders bevorzugten Ausführungsform beispielhaft erläutert. Dabei zeigt:
- Fig. 1: einen zweiteiligen Zubehörträger in einer perspektivischen Draufsicht; und
- Fig. 2: zwei zweiteilige Zubehörträger in einer perspektivischen Seitenansicht.

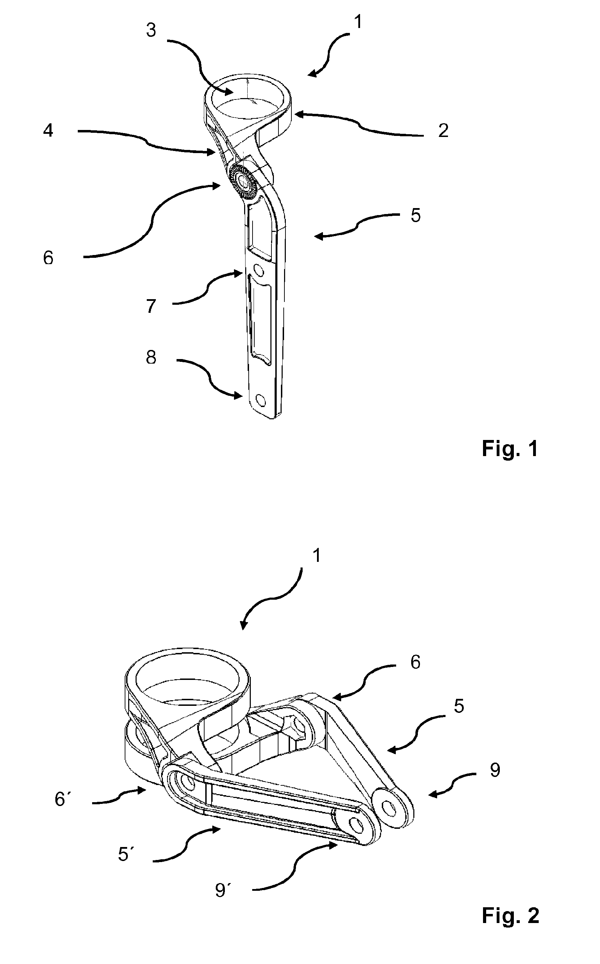

Gemäß der Figur 1 weist der zweiteilige Zubehörträger 1 ein erstes kreisringförmiges Halteteil 2 zur Halterung des Trägers am Gabelschaftrohr eines Fahrrads auf. Der Ringinnendurchmesser 3 ist dem Außendurchmesser des Schaftrohrs angepasst. Zudem weist das Halteteil 2 einen mit der Ringmantelfläche integral ausgebildeten armförmigen Fortsatz 4 auf, an dem ein zweites längliches Trägerteil 5 verschwenkbar angelenkt ist. Die beiden Teile 2, 5 sind durch das eine horizontale Achse aufweisende Schwenkgelenk 6 verbunden. Das Trägerteil 5 weist Durchbrüche 7, 8 auf, die zur Befestigung von Zubehör dienen. Die in Fig. 1 gezeigte Ausführungsform dient beispielsweise zur Halterung eines Flaschenhalters (nicht in der Fig.), der über die beiden Durchbrüche parallel zum Trägerteil 5 mittels einer Schraubverbindung befestigt wird.

Figur 2 zeigt die Kombination von zwei Zubehörträgern 1,1' zur Befestigung von großem oder schwerem Zubehör. Die rotationssymmetrische Ausführung der beiden Teile 2 und 5 ermöglicht es, Zubehör über zwei Anlenkpunkte 9, 9', beispielsweise über eine Schraub- oder Schnappverbindung, zu haltern. In der in Figur 2 gezeigten Ausführungsform liegen die beiden Anlenkpunkte 9, 9' auf derselben Höhe, was beispielsweise zur Befestigung einer größeren Lampe von Vorteil ist. Selbstverständlich können sich die beiden Anlenkpunkte 9, 9'auch auf verschiedenen Höhen befinden, beispielsweise indem das Trägerteil 5 über die Schwenkachse 6 nach oben und das Trägerteil 5'über die Schwenkachse 6'nach unten verschwenkt wird.

Die vorliegende Erfindung eignet sich insbesondere zur Befestigung von Fahrradzubehör, wie beispielsweise aktive und passive Beleuchtungseinrichtungen, Fahrradcomputer, Tachometer, Taschen und Flaschenhalter an dem Steuerrohr. Durch das eine horizontale Achse aufweisende Schwenkgelenk, mittels dem das mit dem armförmigen Fortsatz des Halteteils verbundene längliche Trägerteil verschwenkbar ist, lässt sich vorteilhaft ein weiterer Freiheitsgrad für die Anordnung von Zubehör in dem begrenzten Raum vor bzw. seitlich des Vorbaus gewinnen.

### Bezugszeichenliste:

- 1: Zubehörträger
- 2: Halteteil
- 3: Ringinnendurchmesser
- 4: Fortsatz
- 5: Trägerteil
- 6: Schwenkachse
- 7: Durchbruch
- 8: Durchbruch
- 9: Anlenkpunkt

## Patentansprüche

1. Zweiteiliger Zubehörträger (1) für ein Fahrrad mit einem ersten kreisringförmigen Halteteil (2) zur Halterung des Trägers am Gabelschaftrohr des Fahrrads, mit einem dem Außendurchmesser des Schaftrohrs angepassten Ringinnendurchmesser (3) und einem mit der Ringmantelfläche integral ausgebildeten armförmigen Fortsatz (4), und einem zweiten länglichen Trägerteil (5) zur Aufnahme von Zubehör mit zumindest einem Durchbruch (7, 8) und/oder einem Langloch, **gekennzeichnet durch** ein eine horizontale Achse aufweisendes Schwenkgelenk (6), mittels dem das mit dem armförmigen Fortsatz (4) des Halteteils (2) verbundene längliche Trägerteil (5) verschwenkbar ist.

2. Zubehörträger (1) nach Anspruch 1, **dadurch gekennzeichnet, dass** das Schwenkgelenk (6) eine radiale Verzahnung aufweist.

3. Zubehörträger (1) nach Anspruch 1 oder 2, **dadurch gekennzeichnet, dass** Schwenkgelenk (6) eine laterale Erweiterung aufweist.

4. Zubehörträger (1) nach einem der vorstehenden Ansprüche, **dadurch gekennzeichnet, dass** längliche Trägerteil (5) einfach oder mehrfach gekröpft ist.

5. Zubehörträger (1) nach einem der vorstehenden Ansprüche, **dadurch gekennzeichnet, dass** das kreisförmige Halteteil (2) und das längliche Trägerteil (5) rotationssymmetrisch ausgebildet sind.

6. Fahrrad mit einem Zubehörträger (1) nach einem der Ansprüche 1 bis 5.
